# EUROPEAN PATENT SPECIFICATION

(11) **EP 1 661 449 B1**
(45) Date of publication and mention of the grant of the patent: **23.07.2008**
(21) Application number: 05257374.8
(22) Date of filing: 28.11.2005
(51) Int. Cl.: A01D 75/20

(54) **Protective cover for agricultural mower**
Schutzorgan für einen Mäher
Organe de protection pour une faucheuse

(30) Priority: 30.11.2004 GB 0426261
(43) Date of publication of application: 31.05.2006
(73) Proprietor: Kverneland ASA, 4344 Kvernaland (NO)
(72) Inventor: Adriaans, Andreas Antonius Maria, 5663 HL Geldrop (NL)
(74) Representative: Raynor, Simon Mark

(56) References cited:
- EP-A- 0 706 750
- EP-A- 1 369 024
- DE-U1-1202004 005 78
- NL-A- 8 800 455

## Description

This invention relates to an agricultural mower having a support frame, means for attaching the support frame to a propelling vehicle, at least one mowing device mounted on the support frame, and a protective cover overlying the mowing device.

Agricultural mowers can be of the rotating cutter disc or drum type, in which a number of discs or drums are spaced apart along a cutter bar which extends generally perpendicular to the mowing direction, and each being rotatable about an axis which extends generally perpendicular to the ground over which the mower is moving. Agricultural mowers can also be of the linearly reciprocating cutter blade type. Also, can be of the horizontal axle flail-type.

All types of agricultural mower are required to be provided with some form of protective cover which overlies the mowing device(s), and which also has a depending flexible curtain which extends downwardly from the outer periphery of the cover to a position close to the surface of the ground which is being mown.

The protective cover, including the flexible curtain, has two main functions. First of all, the cover itself (which extends generally parallel to the ground surface and which overlies the mowing device) is usually made of sheet metal or plate, and which is supported by the framework so as to form a rigid support platform which can prevent any person falling onto the platform from coming into contact with the mowing device. This is the main function of the rigid cover.

However, the cover may also contain any stones or other material on the ground which is engaged by the mowing device and then flung upwardly, and which might otherwise cause possible injury to personnel nearby.

The flexible curtain serves partly to contain the mown crop, and swath guides or the like along the rear side of the mower guide the mown crop rearwardly into required swaths. The flexible curtain also has the important task of absorbing the kinetic energy of any flying objects which have been flung laterally by the mowing device.

Although, of course, the primary function of the mowing device is to mow the particular standing crop (usually grass), inevitably stone and other debris can be found on the ground surface and which can be engaged by the working tips of the mowing devices and then flung at high speeds (80 metres per second) and usually in a direction generally parallel to the ground, or inclining upwards.

It is usual therefore for the cover to be made of rigid sheet material, e.g. metal plate, and for the curtain to be made of elastomeric material, e.g. rubber with rigid inserts to catch the laterally moving objects.

It is also usually necessary to allow at least part of the cover to be adjustable from its normal working position to an access position which permits an operator to gain access to the working parts of the mower, e.g. the drive train to the mowing devices, or the mowing devices themselves, for repair and maintenance purposes. This requirement to allow access to the working parts, via the opening cover part, inevitably adds to the complication in the manufacture of the support framework.

It is known from EP 0706750 to provide a protective cover for an agricultural cultivating machine, and particularly a mower, and which has the usual two part form, namely a top protective cover plus a depending flexible curtain. Part of the cover is mounted on its support frame in such a way that it can be adjusted to an open position in which it allows access to the working parts of the machine. There is also provided a depending safety device which is intended to provide a warning signal to the operator, in the event that the cover part is unintentionally left in its open position, when the operator restarts the working operation of the machine.

Given all of these requirements in the design of the known agricultural machine (the design and manufacture of the support frame, the cover, and the curtain), the design is somewhat complex, and especially at the opposed lateral ends of the cover, resulting in an inevitably heavyweight support structure.

The weight of the support structure, the cover and the curtain becomes a high proportion of the overall weight of the machine, which is undesirable from a manufacturing cost point of view, and also giving rise to increased fuel consumption. Further, the rigid support does not have any ability to undergo resilient deformation, in the event of any accidental impact with fixed objects in a field, e.g. a tree trunk, bush or fence post.

The invention therefore seeks to provide an improved protective cover for an agricultural mower which addresses these problems of the known machine.

According to the invention, there is provided an agricultural mower having a support frame, means for attaching the support frame to a propelling vehicle, at least one mowing device mounted on the support frame, a cover overlying at least part of the mowing device and a flexible curtain depending from at least part of the outer periphery of the cover so as partially to surround the mowing device:
characterised in that the cover comprises an assembly of upper and lower protective sheets which are spaced apart from each other and which are connected together along two opposed edge regions.

At least one of the sheets, and preferably both, is made of flexible material, desirably plastics material, and especially moulded polyethylene.

The upper and lower sheets may be formed as a one-piece plastic moulding, preferably formed by rotational moulding.

One of the opposed edge regions along which the assembly of upper and lower sheets are interconnected may be the region from which the flexible curtain depends.

The other opposed edge region along which the assembly of upper and lower sheets is interconnected is located above and preferably near to the axis of rotation of the mowing device, when the latter takes the form of a rotating disc or drum type mower unit.

Preferably, both the upper and lower sheets converge towards their outermost ends. Also, the lower sheet is preferably downwardly concave, so that it will tend to bend upwards towards the upper sheet in the event of application of a substantially horizontal impact to the assembly of upper and lower sheets.

Preferably, one or more spacers are provided between the upper and lower sheets and which may be connected to the lower sheet to extend upwardly towards, but stopping short of, the upper sheet, thereby to define a clearance. Thus, upon application of a load to the assembly of upper and lower sheets, the clearance must first be taken up by downward movement relatively of the upper sheet relative to the lower sheet, and then increased stiffness is provided to any subsequent downward displacement of the assembly of upper and lower sheets.

To provide resilient resistance to any accidental lateral impact being applied to the cover, e.g. from contact with a tree trunk, bush or fence post, it is preferred that a design weakness is provided in the upper and/or lower sheet which allows resilient downward deformation of the assembly of upper and lower sheets, outwardly of the design weakness.

The upper sheet may have attachments by which the assembly of upper and lower sheets can be connected to the support frame, and preferably these attachments take the form of hinge mountings.

The opposed edge region of the assembly of upper and lower sheets is preferably adjacent to the attachments, and abuts an end face of the support frame, to transmit translational forces thereto.

The agricultural mower may include a set of mower discs or drums which are spaced apart transversely of the mowing direction, and in which a respective assembly of upper and lower cover sheets is arranged above each of the outermost discs or drums of the set.

A preferred embodiment of agricultural mower according to the invention will now be described in detail, by way of example only, with reference to the accompanying drawings, in which:
figure 1 is detail plan view of one end of a set of rotatable mower discs, provided with a protective cover assembly according to the invention;
figure 2 is a rear view indicating impact of an outer edge of the protective cover assembly with a fixed object in a field;
figure 3 is a similar view, showing resilient downward deformation which takes place upon application of a downward load on an assembly of upper and lower protective sheets of the cover of the invention; and
figure 4 is a rear view, corresponding to figure 1, showing in more detail the constructional details of the protective cover assembly.

Referring now to the drawings, an agricultural mower according to the invention is designated generally by reference 10, and has a support frame 2, and which is provided with means (not shown) for attaching the support frame to a propelling vehicle. At least one mowing device 3 is mounted on the support frame 2, and usually the illustrated mowing device 3 will be the outermost mowing unit of a set of mower units extending transversely of the mowing direction.

A cover 1 overlies at least part of the mowing device 3, and a flexible curtain 4 depends from at least part of the outer periphery of the cover 1 so as partly to surround the mowing device 3.

The cover 1 comprises an assembly of upper and lower protective sheets 1 a, 1b which are spaced apart from each other and which are connected together along two opposed edge regions 1c,1d.

At least one of the sheets 1a,1b is made of flexible material, and preferably plastics material, and especially moulded polyethylene. Conveniently, the upper and lower sheets 1 a, 1b are formed as a one-piece plastics moulding, preferably formed by rotational moulding.

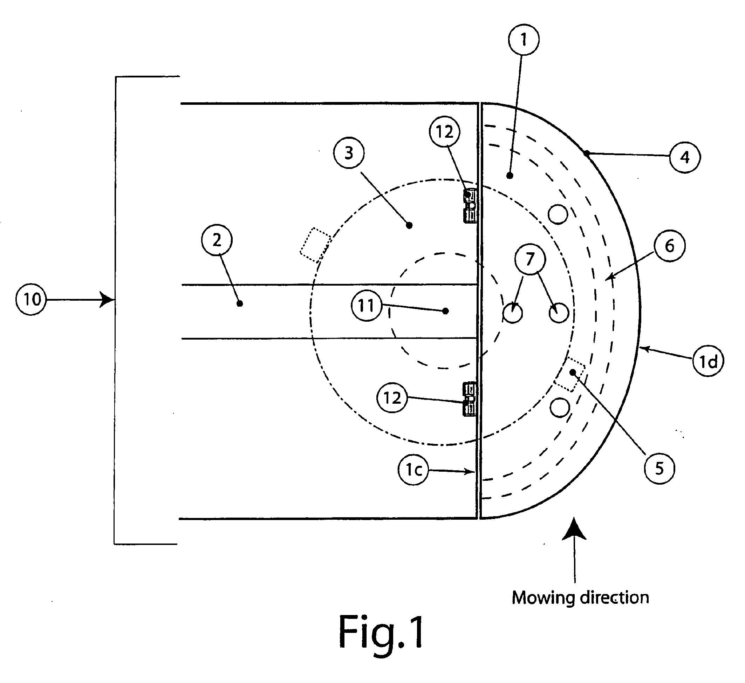

One of the opposed edge regions 1d along which the assembly of upper and lower sheets 1a,1b are interconnected is the region from which the flexible curtain 4 depends, and which is a generally semi-circular shape, as seen in figure 1. The other opposed edge region 1 c along which the upper and lower sheets 1 a, 1b are interconnected is located above, and near to the axis of rotation 11, of the mowing device 3.

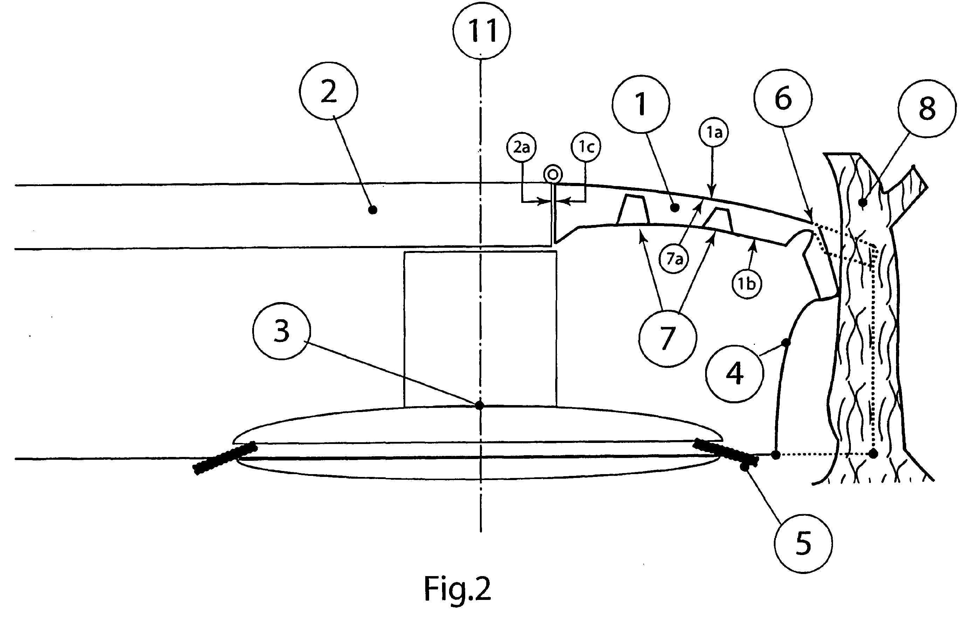

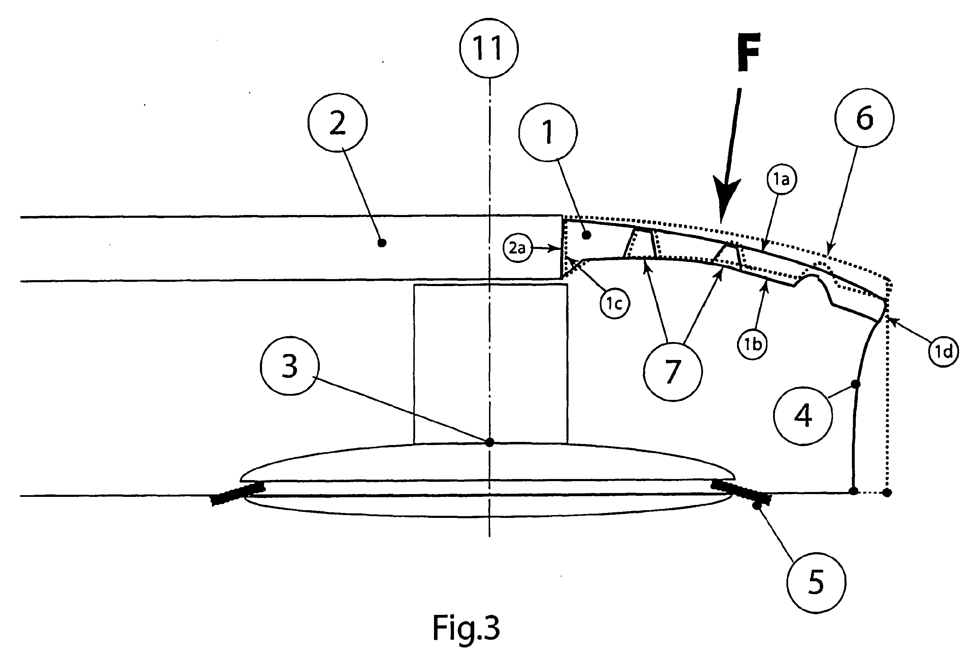

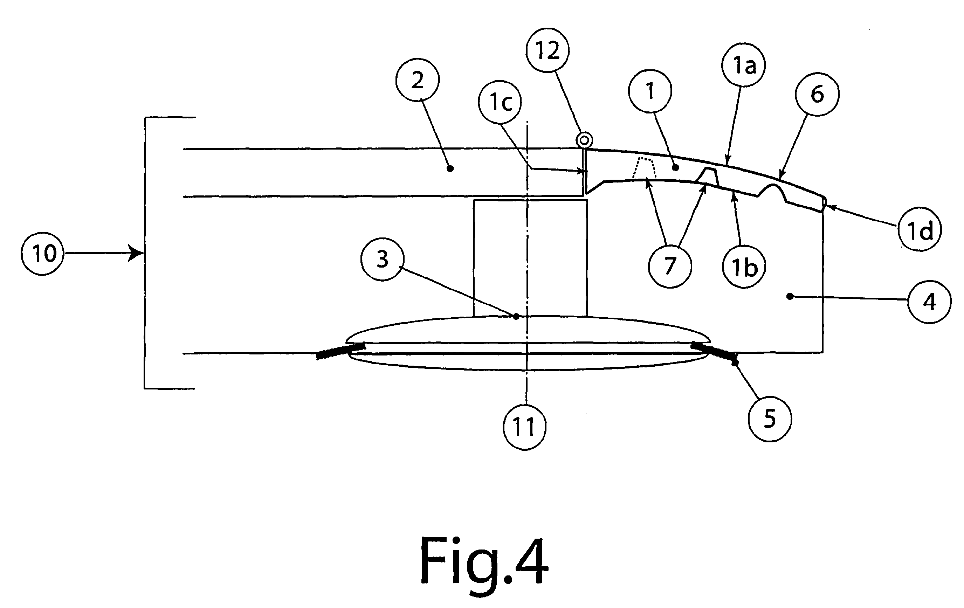

As can be seen particularly in figures 2, 3 and 4, the lower sheet 1b at least is downwardly concave, in its unloaded condition, and which allows upward deformation of the lower sheet. Also, spacers 7 are provided between the upper and lower sheets 1 a, 1b and which are connected to the lower sheet 1b and extend upwardly towards, but stop short of, the upper sheet 1a to define a clearance 7a. Therefore, the assembly of upper and lower sheets 1a,1b provides increased stiffness to resist an applied load F, after the clearance 7a has been taken up.

As can be seen particularly in figure 2, a design weakness 6 is provided in the lower sheet 1b, which allows resilient downward deformation of the portions of the assembly of upper and lower sheet 1a,1b located outwardly of the design weakness 6. The illustrated impact takes place with the trunk of a tree 8, but clearly the resilient deformability of the assembly of sheets 1a,1b can resist impact from other fixed objects, such as bushes or fence posts. After the object has been passed, the cover assembly can resiliently return to its normal operating position.

The upper sheet 1a has attachments 12 by which the assembly of upper and lower sheets 1a,1b is connected to the support frame 2, and in the illustrated embodiment the attachments 12 are hinge mountings. This allows the assembly to be upwardly adjusted to an open access position allowing access to the working components of the machine for repair or maintenance purposes.

The inboard edge connecting region 1c of the assembly of upper and lower sheets 1a,1b abuts an end face 2a of the support frame 2, to transmit translational forces thereto.

## Claims

1. An agricultural mower 10 having a support frame 2, means for attaching the support frame to a propelling vehicle, at least one mowing device 3 mounted on the support frame 2, a cover 1 overlying at least part of the mowing device 3, and a flexible curtain 4 depending from at least part of the outer periphery of the cover 1 so as partly to surround the mowing device 3:
**characterised in that** the cover 1 comprises an assembly of upper and lower protective sheets 1a, 1b which are spaced apart from each other and which are connected together along two opposed edge regions 1c, 1d.

2. A mower according to claim 1, in which at least one of the sheets 1a,1b is made of flexible material.

3. A mower according to claim 2, in which the flexible material is plastics material.

4. A mower according to any one of claims 1 to 3, in which the upper and lower sheets 1a, 1b are formed as a one-piece plastics moulding, preferably formed by rotational moulding.

5. A mower according to any one of claims 1 to 4, in which one of the opposed edge regions 1d, along which the assembly of upper and lower sheets 1a, 1b are interconnected, is the region from which the flexible curtain 4 depends.

6. A mower according to claim 5, in which the other edge connecting region 1 c, along which the upper and lower sheets 1a, 1b are interconnected, is located above and near to the axis of rotation 11 of the mowing device 3.

7. A mower according to any one of the preceding claims, in which the lower sheet 1b is downwardly concave.

8. A mower according to any one of the preceding claims, in which spacers 7 are provided between the upper and lower sheets 1a, 1b.

9. A mower according to claim 8, in which the spacers 7 are connected to the lower sheet 1b and extend upwardly towards, but stop short of, the upper sheet 1a to define a clearance 7a, whereby the assembly of upper and lower sheets 1a,1b provide increased stiffness to resist an applied load F after the clearance 7a has been taken up.

10. A mower according to any one of the preceding claims, in which a design weakness 6 is provided in the upper and/or lower sheet 1a, 1b which allows resilient downward deformation of the portions of the upper and lower sheet 1a,1b which are located outwardly of the design weakness 6.

11. A mower according to any one of the preceding claims, in which the upper sheet 1 a has attachments 12 by which the assembly of upper and lower sheets I a, 1b is connected to the support frame 2.

12. A mower according to claim 11, in which the attachments 12 are hinge mountings.

13. A mower according to claim 12, in which said other edge connecting region 1c of the assembly of upper and lower sheets 1a, 1b abuts an end face 2a of the support frame 2, to transmit translational forces thereto.

14. A mower according to any one of the preceding claims, including a set of mower discs or drums 3 spaced apart transversely of the mowing direction, in which a respective assembly of upper and lower cover sheets 1 a, 1b is arranged above each of the outermost discs or drums.

## Patentansprüche

1. Landwirtschaftliches Mähwerk 10, welches ein Gestell 2, ein Mittel zum Anbringen des Gestells an einem Antriebsfahrzeug, mindestens eine Mähvorrichtung 3, die auf dem Gestell 2 befestigt ist, eine Abdeckung 1, die zumindest einen Teil der Mähvorrichtung 3 überlagert, und eine flexible Schiebeplane 4 aufweist, die zumindest von einem Teil des äußeren Umfangs der Abdeckung 1 abhängt, derart, dass die Mähvorrichtung 3 teilweise umgeben ist;
**dadurch gekennzeichnet, dass** die Abdeckung 1 eine Baugruppe aus oberen und unteren Schutzplatten 1a, 1b umfasst, welche einen Abstand voneinander aufweisen und welche an zwei gegenüberliegenden Randbereichen 1c, 1d entlang miteinander verbunden sind.

2. Mähwerk nach Anspruch 1, in welchem mindestens eine der Platten 1a, 1b aus einem flexiblen Material hergestellt ist.

3. Mähwerk nach Anspruch 2, in welchem es sich bei dem flexiblen Material um ein Kunststoffmaterial handelt.

4. Mähwerk nach einem der Ansprüche 1 bis 3, in welchem die oberen und unteren Platten 1a, 1b als ein einteiliger Kunststoff-Formkörper ausgebildet sind, welcher vorzugsweise durch Rotationsformen gebildet wird.

5. Mähwerk nach einem der Ansprüche 1 bis 4, in welchem einer der gegenüberliegenden Randbereiche 1d, entlang welchem die Baugruppe aus oberen und unteren Platten 1a, 1b verbunden ist, der Bereich ist, von welchem die flexible Schiebeplane 4 abhängt.

6. Mähwerk nach Anspruch 5, in welchem sich der andere Randverbindungsbereich 1c, entlang welchem die oberen und unteren Platten 1a, 1b verbunden sind, oberhalb und in der Nähe der Drehachse 11 der Mähvorrichtung 3 befindet.

7. Mähwerk nach einem der vorhergehenden Ansprüche, in welchem die untere Platte 1b nach unten konkav ist.

8. Mähwerk nach einem der vorhergehenden Ansprüche, in welchem zwischen den oberen und unteren Platten 1a, 1b Abstandhalter 7 bereitgestellt werden.

9. Mähwerk nach Anspruch 8, in welchem die Abstandhalter 7 mit der unteren Platte 1b verbunden sind und sich nach oben in Richtung der oberen Platte 1a erstrecken, aber kurz davor enden, um einen Zwischenraum 7a zu definieren, wodurch die Baugruppe aus oberen und unteren Platten 1a, 1b für eine erhöhte Steifigkeit sorgt, um einer aufgebrachten Last F standzuhalten, nachdem der Zwischenraum 7a aufgebraucht ist.

10. Mähwerk nach einem der vorhergehenden Ansprüche, in welchem in der oberen und/oder unteren Platte 1a, 1b eine Konstruktionsschwäche 6 geschaffen ist, welche eine federnde Verformung der Abschnitte der oberen und unteren Platte 1a, 1b, die sich auswärts der Konstruktionsschwäche 6 befinden, nach unten ermöglicht.

11. Mähwerk nach einem der vorhergehenden Ansprüche, in welchem die obere Platte 1a Befestigungen 12 aufweist, durch welche die Baugruppe der oberen und unteren Platten 1a, 1b mit dem Gestell 2 verbunden ist.

12. Mähwerk nach Anspruch 11, in welchem es sich bei den Befestigungen 12 um Scharnierbefestigungen handelt.

13. Mähwerk nach Anspruch 12, in welchem der andere Randverbindungsbereich 1c der Baugruppe aus oberen und unteren Platten 1a, 1b an eine Endseite 2a des Gestells 2 stößt, um translatorische Kräfte darauf zu übertragen.

14. Mähwerk nach einem der vorhergehenden Ansprüche, welches einen Satz Mähteller oder -trommeln 3 umfasst, die quer zur Mährichtung einen Abstand voneinander aufweisen, in welchem eine entsprechende Baugruppe aus oberen und unteren Abdeckplatten 1a, 1b oberhalb der jeweiligen äußersten Teller oder Trommeln angeordnet ist.

## Revendications

1. Faucheuse agricole (10) comportant un cadre (2) de soutien, un moyen d'attache du cadre de soutien à un véhicule de propulsion, au moins un dispositif (3) de fauchage monté sur le cadre (2) de soutien, un couvercle (1) recouvrant au moins une partie du dispositif (3) de fauchage et un rideau flexible (4) pendant à partir d'au moins une partie de la périphérie extérieure du couvercle (1) de manière à entourer en partie le dispositif (3) de fauchage ;
**caractérisée en ce que** le couvercle (1) comprend un ensemble de feuilles protectrices supérieure et inférieure (1a, 1b) qui sont espacées l'une de l'autre et qui sont reliées ensemble le long de deux zones (1c, 1d) de bord opposées.

2. Faucheuse selon la revendication 1, dans laquelle au moins une des feuilles (1a, 1b) est réalisée dans un matériau flexible.

3. Faucheuse selon la revendication 2, dans laquelle ce matériau est une matière plastique.

4. Faucheuse selon l'une quelconque des revendications 1 à 3, dans laquelle les feuilles supérieure et inférieure (1a, 1b) sont formées par un moulage en matière plastique d'une seule pièce, de préférence par moulage rotatif.

5. Faucheuse selon l'une quelconque des revendications 1 à 4, dans laquelle une des zones (1d) de bord opposées, le long de laquelle l'ensemble des feuilles supérieure et inférieure (1a, 1b) sont interconnectées, est la région à partir de laquelle pend le rideau flexible (4).

6. Faucheuse selon la revendication 5, dans laquelle l'autre zone (1c) de connexion de bord, le long de laquelle les feuilles supérieure et inférieure (1a, 1b) sont interconnectées, se situe au-dessus de l'axe de rotation (11) du dispositif (3) de fauchage et à proximité de celui-ci.

7. Faucheuse selon l'une quelconque des revendications précédentes, dans laquelle la feuille inférieure (1b) est concave vers le bas.

8. Faucheuse selon l'une quelconque des revendications précédentes, dans laquelle des pièces d'espacement (7) sont prévues entre les feuilles supérieure et inférieure (1a, 1b).

9. Faucheuse selon la revendication 8, dans laquelle les pièces d'espacement (7) sont reliées à la feuille inférieure (1b) et s'étendent vers le haut vers la feuille supérieure (1a) mais s'arrêtent avant celle-ci, en définissant un espace (7a), moyennant quoi l'ensemble des feuilles supérieure et inférieure (1a, 1b) apporte une rigidité accrue afin de résister à une charge appliquée (F) après que l'espace (7a) a été réduit.

10. Faucheuse selon l'une quelconque des revendications précédentes, dans laquelle une faiblesse (6) de conception est prévue dans la feuille supérieure et/ou inférieure (1a, 1b) qui permet une déformation résiliente vers le bas des parties des feuilles supérieure et inférieure (1a, 1b) qui se trouvent à l'extérieur de la zone (6) de faiblesse de conception.

11. Faucheuse selon l'une quelconque des revendications précédentes, dans laquelle la feuille supérieure (1a) comporte une attache (12) par laquelle l'ensemble des feuilles supérieure et inférieure (1a, 1b) est relié au cadre (2) de soutien.

12. Faucheuse selon la revendication 11, dans laquelle les attaches (12) sont des montages sur charnières.

13. Faucheuse selon la revendication 12, dans laquelle ladite autre zone (1c) de connexion de bord de l'ensemble des feuilles supérieure et inférieure (1a, 1b) vient en butée contre une face d'extrémité (2a) du cadre (2) de soutien, afin de lui transmettre des forces de translation.

14. Faucheuse selon l'une quelconque des revendications précédentes, comprenant un ensemble de disques ou de tambours (3) de faucheuse, espacés transversalement par rapport à la direction de fauchage, dans laquelle un ensemble respectif de feuilles supérieure et inférieure (1a, 1b) formant couvercles est disposé au-dessus de chacun des disques ou tambours les plus extérieurs.
